**Europäisches Patentamt**

(19) **European Patent Office**

**Office européen des brevets**

(11) Publication number: **0 250 537**

**B1**

(12) # EUROPEAN PATENT SPECIFICATION

(45) Date of publication of the patent specification:
**31.05.89**

(51) Int. Cl.⁴: **F 01 N 3/28**

(21) Application number: **87900319.2**

(22) Date of filling: **11.12.86**

(86) International application number:
**PCT/SE 86/00566**

(87) International publication number:
**WO 87/03646 (18.06.87 Gazette 87/13)**

(54) **CATALYST HOUSING.**

(30) Priority: **13.12.85 SE 8505903**

(43) Date of publication of application:
**07.01.88 Bulletin 88/1**

(45) Publication of the grant of the patent:
**31.05.89 Bulletin 89/22**

(84) Designated Contracting States:
**DE FR GB IT**

(56) References cited:
**SE-B-396 440**
**SE-B-432 632**
**US-A-3 780 772**
**US-A-4 247 520**

(73) Proprietor: **SAAB- SCANIA Aktiebolag, S-461 80 Trollhättan (SE)**

(72) Inventor: **GARCIA, Mikael, Albertsvägen 46, S-461 57 Trollhättan (SE)**

(74) Representative: **Lagman, Sven, H. ALBIHNS PATENTBYRA AB P.O. Box 3137, S-103 62 Stockholm (SE)**

EP 0 250 537 B1

LIBER, STOCKHOLM 1989

## Description

### Catalyst Housing

The present invention relates to a catalyst housing which is a part of a vehicle exhaust system, said catalyst housing including an intermediate part with a substantially elliptical cross-section between an inlet part and an outlet part, with the intermediate part enclosing a catalyst body, the inlet part joining the intermediate part to a cylindrical pipe through which exhaust gases can flow into the catalyst housing.

Catalyst housings with diametric impressions are already known from the US Patent Specification 4 247 520 and the German Patent Specification 2 843 365. Both these publications show how the outer walls of the inlet part are provided with impressions, which are mutually opposed along the minor axis of the elliptical part. Spreading of the gas flow along the major axis of the elliptical part is thus achieved, which gives better distribution of the gas over the following catalyst body.

These known solutions mean, however, that the impressed portions of the outer walls of the inlet part will be intensively subjected to heat from the gas flow. In order to obtain the necessary strength at the loads, including vibrations and the like, which occur during operation it is necessary to use a special heat-resistant material and/or sufficient material dimensions, resulting in higher weight and increased product cost. Furthermore, the high wall temperature can cause problems relating to the sealed encapsulation of the catalyst body in the housing, as well as problems in placing the catalyst unit in the vehicle.

A further solution is known from the US Patent 3 780 772, which illustrates how a cylindrical pipe is inserted into the inlet part, and formed with holes in its circumferential surface for spreading the gas flow over the entire area of the catalyst body. However, this solution results in increased counter pressure and thereby energy losses in the exhaust system.

The present invention has the task of providing a solution in which the deficiencies of the catalyst housings in the prior art are eliminated. With this in mind, the invention is distinguished in that the cylindrical pipe extends into the inlet part with an end portion formed with two diametrically opposed impressions which, in a plane through the minor axis of the intermediate part and in the gas flow direction, converge towards the inner end of the end portion to form a symmetrical deformation of the end portion so that two branch ducts formed by the deformation allow distributed gas flow over the elliptical end wall surface of the catalyst body.

By the inventive embodiment of the pipe end portion, there is obtained a sought-after spread of the gas flow over the entire through-flow area of the elliptical intermediate part without any notable counter pressure being created. At the same time, only the mentioned end portion, which per se lacks a carrying function, will be subjected to the direct effect of the heat from the gas flow. The inlet part can thus be dimensioned in a simpler and/or lighter material and still meet the strength requirements put on it.

In an advantageous embodiment of the invention, the inner end portion is formed with two openings that deflect the gas flow outwardly, these openings being situated diametrically opposite each other in a plane through the major axis of the intermediate part, adjacent the entrance of the end portion into the inlet part. The heat stresses on affected portions of the outer walls of the inlet part do indeed increase as a result of the mentioned diametrically opposed openings, but on the other hand, there is enabled an increased spread of the gas flow, so that the distance between the end of the end portion and the end wall surface of the catalyst body can be kept comparatively short. Thus, the total dimensions of the catalyst housing can be kept within reasonable values.

Other distinguishing features of the invention are disclosed in the accompanying claims and the following description of embodiments exemplifying the invention. The description is made with reference to the accompanying figures where

Fig. 1   is a side view of an inlet portion of a catalyst housing;
Fig. 2   is essentially a section A - A in Fig. 1;
Fig. 3   is essentially a view B - B in Fig. 2;
Fig. 4   is a side view of an alternative embodiment of an inlet portion of a catalyst housing;
Fig. 5   is essentially a section C - C in Fig. 4, and
Fig. 6   is essentially a view D - D in Fig. 5.

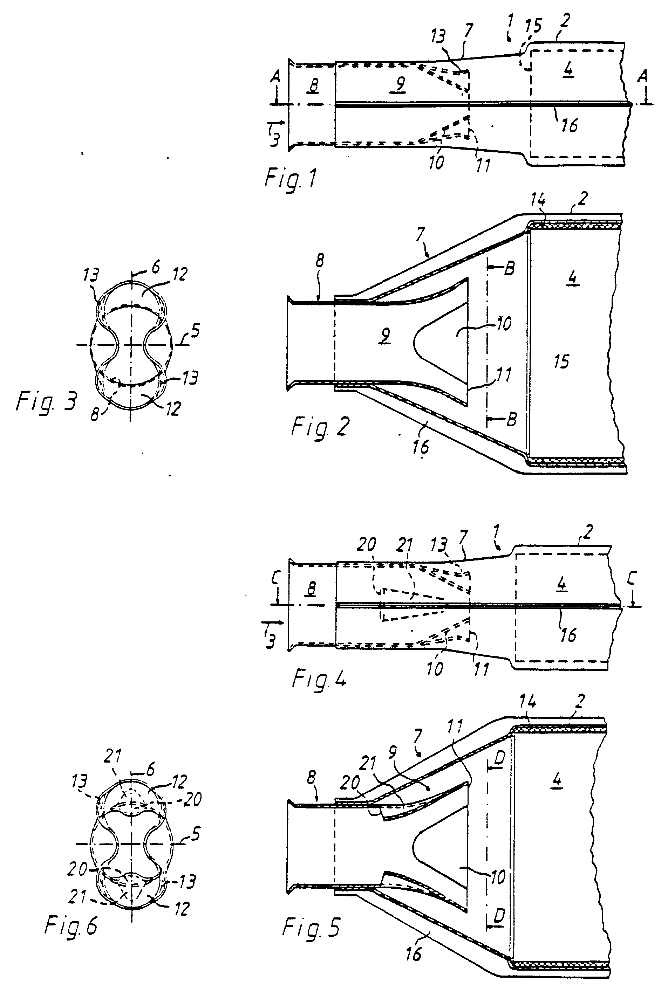

In Fig. 1 there is illustrated an inlet portion of a catalyst housing 1, which is intended to be a part of the exhaust system of a motor vehicle. The catalyst housing 1 thus includes an inlet part 7, an intermediate part 2, and an unillustrated outlet part. The chief flow direction of the gas through the catalyst housing 1 is illustrated by an arrow in Figs. 1 and 4.

The catalyst housing intermediate part 2 is formed with an elliptical cross-section which can be regarded as having a minor axis 5 and a major axis 6, with the positions according to Fig. 3. The intermediate part 2 encloses a monolithic catalyst body 4 located with a seal 14 in a manner known per se, the catalyst body having an elliptical end wall surface 15 complemental to the cross-section of the intermediate part 2.

The catalyst housing inlet part 7, its intermediate part 2 and its unillustrated outlet part are formed as two symmetrical halves with a longitudinal parting plane. The halves are welded together in this plane along opposing flanges 16.

The inlet part 7 connects the intermediate part 2 with a cylindrical inlet pipe 8, which is arranged to have an end portion 9 thrust into the inlet part 7. This end portion 9 is formed with a plurality of impressions 10, 21 for spreading the gas flow along the major axis 6 and to give the gas a uniform distribution over the entire end wall surface 15 of the catalyst body 4.

The end portion 9 has a sealed joint to the inlet part 7 and extends axially into the inlet part substantially over half the length of the inlet part. The end portion 9 is formed with two mutually opposing impressions 10 located on the minor axis 5. The impressions 10 converge in the gas flow direction, such as to have a least mutual spacing at the inner end 11 of the end portion 9.

A symmetrical deformation of the end portion 9 is obtained by the impressions 10. This deformation permits gas flow along the major axis 6 through two branch ducts 12 formed by the impressions 10. Apart the region where the wells of the branch ducts join each other, the branch ducts 12 have a substantially cylindrical shape at the inner end of the end portion 9. The smallest total through-flow area of said end portion 9 thus differs from the through-flow area of the cylindrical pipe 9 by less than twenty per cent.

In addition, the respective branch duct walls are formed with an outlet 13 expanding the through-flow area at the inner end 11. As will be seen from Figs. 1 and 3, this expansion only relates to the portions of the branch duct walls which are diametrically opposite each other on an axis parallel to the minor axis 5. The direction the gas flow may obtain from the duct walls converging towards the major axis 6 is thus compensated. The expansions 13 accordingly enable distribution of the gas flow over the entire elliptical end wall surface 15 of the catalyst body 4.

In the description, now to be embarked upon, of an alternative embodiment of the inlet portion in accordance with Figs. 4 - 6, the same reference designations are used as in Figs. 1 - 3 for the parts having direct counterpart in both embodiments.

The embodiment in accordance with Figs. 4 - 6 differs from the one according to Figs. 1 - 3 only in the presence of two slotlike openings 20 in the inner end portion 9 of the cylindrical pipe. These openings 20 are intended to deflect a part of the gas flow towards the outmost parts of the major axis 6 of the elliptical part. The openings 20 are situated in the end portion 9, diametrically opposite each other along the major axis 6, and in a position just inward of the connection between the cylindrical pipe 8 and the inlet part 7. Each opening 20 is formed as a transverse slot with a radial impression 21, which successively tapers off in a direction towards the inner end 11 of the end portion 9. In accordance with Fig. 6, the openings 20 have a through-flow area in a plane substantially at right angles to the direction of the gas flow.

Due to the presence of said openings 20, the possibility of bringing the inner end 11 of the end portion closer to the end wall surface 15 of the catalyst body 4 is increased. In this way, heating of a catalyst body 4, cold on starting, is accelerated, since the hotter and hotter part of the gas flow in the region of the centre of the cylindrical pipe 8 will be concentrated to central portions of the end wall surface 15 of the catalyst body during the starting phase. The more rapidly the catalyst arrives at the correct working temperature, the less will be the quantity of unclean exhaust gases emitted from the exhaust system. When the catalyst and the exhaust gases are hot, the deflecting openings 20 contribute to utilization of the entire end wall surface 15 of the catalyst body 4.

In the solution illustrated in Figs. 4 - 6, the inner end 11 of the end part portion 9 may be placed at a lesser distance from the intermediate part 2 than in the embodiment according to Figs. 1 - 3.

**Claims**

1. A catalyst housing which is part of a vehicle exhaust system, said catalyst housing including an intermediate part (2) with a substantially elliptical cross-section between an inlet part (7) and an outlet part, with the intermediate part (2) enclosing a catalyst body (4), the inlet part (7) joining the intermediate part (1) to a cylindrical pipe (8) through which exhaust gases can flow into the catalyst housing, characterized in that the cylindrical pipe (8) extends into the inlet part (7) with an end portion (9), which is formed with two diametrically opposed impressions (10), which, in a plane through the minor axis (5) of the intermediate part (2) and in the flow direction of the gas, converge towards the inner end (11) of the end portion (9) to form a symmetrical deformation of the end portion (9) such that two branch ducts (12) formed by the deformation allow distributed gas-flow over the elliptical end wall surface (15) of the catalyst body (4).

2. Catalyst housing as claimed in Claim 1, characterized in that the end portion (9) extends axially along half the length of the inlet part (7).

3. Catalyst housing as claimed in Claim 1 or 2, characterized in that the least through-flow area of the inner end portion is less than twenty per cent less than the through-flow area of the cylindrical pipe (8).

4. Catalyst housing as claimed in any one of Claims 1, 2 or 3, characterized in that the inner end portion (9) is formed with two openings (20) diverting the gas flow outwards, these openings being situated mutually opposing in a plane through the major axis (6) of the intermediate part (2) adjacent the entrance of the end portion (9) in the inlet part (7).

5. Catalyst housing as claimed in Claim 1, characterized in that each of the openings (20) in the end portion (9) comprises a radial impression with an outwardly opening transverse slot and that the impression after the slot is successively reduced in a direction towards the inner end of the end portion (9).

6. Catalyst housing as claimed in Claim 1, characterized in that each branch duct (12) has a substantially cylindrical shape at the inner end (11) of the end portion.

7. Catalyst housing as claimed in Claim 6, characterized in that the cylinder-like opening of each branch duct (12) in the inlet part (7) has a configuration (13) widening in the gas flow direction and in a direction parallel to the minor axis (5).

**Patentansprüche**

1. Katalysatorgehäuse, das Teil einer Fahrzeug-Auspuffanlage ist, mit einem Zwischenstück (2) von im wesentlichen elliptischem Querschnitt zwischen einem Einlaßteil (7) und einem Auslaßteil, wobei das Zwischenstück (2) ein Katalysatorhauptteil (4) umschließt, das Einlaßteil (7) das Zwischenstück (1) mit einem zylindrischen Rohr (8) verbindet, durch das Auspuffgase in das Katalysatorgehäuse strömen können, dadurch gekennzeichnet, daß das zylindrische Rohr (8) in das Einlaßteil (7) mit einem Endabschnitt (9) eindringt, der zwei sich diametral gegenüberliegende Vertiefungen (10) aufweist, welche in einer durch die Nebenachse (5) des Zwischenstücks (2) gehenden Ebene und in der Strömungsrichtung des Gases zum inneren Ende (11) des Endabschnitts (9) hin zusammenlaufen und eine symmetrische Verformung des Endabschnitts (9) bilden, derart, daß zwei durch die Verformung entstandene Zweigleitungen (12) eine Verteilung des Gasstroms über die elliptische Endwandfläche (15) des Katalysatorhauptteils (4) ermöglichen.

2. Katalysatorgehäuse nach Anspruch 1, dadurch gekennzeichnet, daß der Endabschnitt (9) sich in Achsenrichtung über die halbe Länge des Einlaßteils (7) erstreckt.

3. Katalysatorgehäuse nach Anspruch 1 oder 2, dadurch gekennzeichnet, daß die kleinste Durchströmungsfläche des inneren Endabschnitts weniger als zwanzig Prozent kleiner als die Durchströmungsfläche des zylindrischen Rohrs (8) ist.

4. Katalysatorgehäuse nach einem der Ansprüche 1, 2 oder 3, dadurch gkenennzeichnet, daß der innere Endabschnitt (9) zwei den Gasstrom nach außen ablenkende Öffnungen (20) aufweist, die sich gegenüberliegend in einer durch die Hauptachse (6) des Zwischenstücks (2) gehenden Ebene an der Eintrittsstelle des Endabschnitts (9) in das Einlaßteil (7) angeordnet sind.

5. Katalysatorgehäuse nach Anspruch 1, dadurch gekennzeichnet, daß jede der Öffnungen (20) im Endabschnitt (9) eine radiale Vertiefung mit einem nach außen offenen Querschlitz aufweist, und daß die Vertiefung hinter dem Schlitz in Richtung zum inneren Ende des Endabschnitts (9) hin sukzessive verkleinert ist.

6. Katalysatorgehäuse nach Anspruch 1, dadurch gekennzeichnet, daß jede Zweigleitung (12) am inneren Ende (11) des Endabschnitts von im wesentlichen zylindrischer Gestalt ist.

7. Katalysatorgehäuse nach Anspruch 6, dadurch gekennzeichnet, daß die zylinderähnliche Öffnung jeder Zweigleitung (12) in das Einlaßteil (7) von einer Konfiguration (13) ist, die sich in Richtung der Gasströmung und parallel zur Nebenachse (5) verbreitert.

**Revendications**

1. Carter de catalyseur faisant partie du système d'échappement d'un véhicule, ce carter de catalyseur comprenant une partie intermédiaire (2) avec une section transversale pratiquement elliptique entre une partie d'entrée (7) et une partie de sortie, la partie intermédiaire (2) enfermant un corps de catalyseur (4), la partie d'entrée (7) raccordant la partie intermédiaire (2) à un tuyau cylindrique (8) à travers lequel les gaz d'échappement peuvent circuler pour pénétrer dans le carter de catalyseur, caractérisé en ce que le tuyau cylindrique (8) s'étend dans la partie d'entrée (7) avec une portion terminale (9), qui comporte deux empreintes diamétralement opposées (10), lesquelles, dans un plan passant par le petit axe (5) de la partie intermédiaire (2) et dans la direction de circulation des gaz, convergent en direction de l'extrémité intérieure (11) de la portion terminale (9) pour former une déformation symétrique de la portion terminale (9) de telle sorte que deux conduits de dérivation (12) formés par la déformation permettent une distribution de la circulation des gaz sur la surface de la paroi terminale elliptique (15) du corps de catalyseur (4).

2. Carter de catalyseur selon la revendication 1, caractérisé en ce que la portion terminale (9) s'étend axialement sur la moitié de la longueur de la partie d'entrée (7).

3. Carter de catalyseur selon la revendication 1 ou 2, caractérisé en ce que la plus petite surface à travers laquelle passe le courant dans la portion terminale intérieure est au plus 20 % inférieure à la surface à travers laquelle circule le courant dans le tube cylindrique (8).

4. Carter de catalyseur selon l'une quelconque des revendications 1, 2 ou 3, caractérisé en ce que la portion terminale intérieure (9) comporte deux ouvertures (20) déviant le courant de gaz vers l'extérieur, ces ouvertures étant situées en vis-à-vis dans un plan passant par le grand axe (6) de la partie intermédiaire (2) au voisinage de l'entrée de la portion terminale (9) dans la partie d'entrée (7).

5. Carter de catalyseur selon la revendication 1, caractérisé en ce que chacune des ouvertures (20) dans la portion terminale (9) comporte une empreinte radiale avec une fente transversale s'ouvrant vers l'extérieur et en ce que l'empreinte après la fente est successivement réduite dans une direction vers l'extrémité intérieure de la portion terminale (9).

6. Carter de catalyseur selon la revendication 1, caracterisé en ce que chaque conduit de dérivation (12) a une forme pratiquement cylindrique au niveau de l'extrémité intérieure (11) de la portion terminale.

7. Carter de catalyseur selon la revendication 6, caractérisé en ce que l'ouverture quasi-cylindrique de chaque conduit de dérivation (12) dans la partie d'entrée (7) a une configuration (13) s'élargissant dans la direction de circulation des gaz et dans une direction parallèle au petit axe (5).

Fig. 1

Fig. 2

Fig. 3

Fig. 4

Fig. 5

Fig. 6